# EUROPEAN PATENT SPECIFICATION

(11) **EP 3 768 818 B1**
(45) Date of publication and mention of the grant of the patent: **25.09.2024**
(21) Application number: 19770609.6
(22) Date of filing: 19.03.2019
(51) Int. Cl.: C12M 1/00, A01K 63/04, A01K 63/00, A01K 97/20, A01K 61/59

(54) **METHOD FOR AQUACULTURE OF SHRIMPS**
VERFAHREN ZUR AQUAKULTUR FÜR GARNELEN
PROCÉDÉ D'AQUACULTURE POUR CREVETTES

(30) Priority: 20.03.2018 US 201862645304 P
(43) Date of publication of application: 27.01.2021
(73) Proprietor: Eco Shrimp Ltd, 4809239 Rosh Haayin (IL)
(72) Inventor: SNIR, Neder, Limassol (CY); MYERS, Gary, Plano, Texas 75025 (US)
(74) Representative: Lecomte & Partners
(86) International application number: PCT/IB2019/052226
(87) International publication number: WO 2019/180615

(56) References cited:
- WO-A1-2016/160141
- CN-B- 101 120 661
- US-A- 3 192 899
- US-A1- 2005 081 794
- US-A1- 2011 290 191
- US-A1- 2015 342 156

## Description

### FIELD OF THE INVENTION

The invention is in the field of aquaculture systems and methods.

### BACKGROUND OF THE INVENTION

The term shrimp is used to refer to various decapod crustaceans. Shrimp covers any of the groups with elongated bodies and a primarily swimming mode of locomotion - most commonly *Caridea* and *Dendrobranchiata.* In some shrimp is used more narrowly and may be restricted to *Caridea*, to smaller species of either group or to only the marine species. Under the broader definition, *shrimp* is synonymous with prawn, covering stalk-eyed swimming crustaceans with long narrow muscular tails, long whiskers and slender legs. In the broadest usage, any small crustacean that resembles a shrimp is included. For purposes of this specification and the accompanying claims, the term "shrimp" is to be construed in its broadest sense.

Shrimp swim forward by paddling with swimmerets on the underside of their abdomens, although their escape response is typically repeated flicks with the tail driving them backwards very quickly. While crabs and lobsters have strong walking legs, shrimp have thin, fragile legs employed primarily for perching.

Shrimp are widespread and abundant with thousands of species adapted to a wide range of habitats. Shrimp are be found feeding near the seafloor on most coasts and estuaries, as well as in rivers and lakes. Some shrimp species flip off the seafloor and dive into the sediment to avoid predators.

The muscular tails of many shrimp are edible and they are widely caught and farmed for human consumption. Commercial shrimp species support an industry worth 50 billion dollars a year. In 2010 the total commercial production of shrimp was nearly 7 million metric tons. During the 1980s shrimp aquaculture became more prevalent. By 2007 the harvest from shrimp farms exceeded traditional harvest from seas and lakes.

Bycatch is a serious problem when shrimp are captured in the wild.

Many shrimp species are small as the term *shrimp* suggests, about 2 cm (0.79 in) long, but some shrimp exceed 25 cm (9.8 in). Larger shrimp are often referred to as *prawns.*

US 2015/342156 A1 discloses a method comprising providing a multilayer closed conduit aquaculture enclosure, said aquaculture enclosure comprising a vertical array of horizontal support surfaces, each surface having an inlet side and an outlet side, an inlet pipe in fluid communication with a common reservoir, and an efflux tank in fluid communication with said vertical array of support surfaces and having one or more drain holes, said method further comprising stocking said enclosure with shrimp.

### SUMMARY OF THE INVENTION

The present disclosure relates to stacked growth surfaces in a crustacean aquaculture system. In some examples, a "floor" surface in a stack serves as a ceiling for the layer immediately below it in the stack. In these embodiments, the distance between tiers in a stack is effectively zero. In some embodiments, each layer in the stack is flooded with water from floor to ceiling. Alternatively or additionally, in some embodiments each layer in the stack is divided by one or more vertical partitions to form compartments or tubes. In some embodiments, there is fluid communication between compartments or tubes at one end only.

For purposes of this specification and the accompanying claims, the terms "tube", "enclosure" and "compartment" each indicate a volume defined by 2 contiguous growth surfaces in a stack and 2 vertical walls that contact them. For purposes of this specification and the accompanying claims, variables defined in "M³" indicate volume of tubes in the system or enclosure volume.

For purposes of this specification and the accompanying claims, variables defined in "M²" indicate either area of support surfaces or area of floor layout space covered by a stack of support surfaces as indicated.

The present disclosure further relates to use of differences in water level to insure a desired flow direction and/or flow rate along stacked growth surfaces in a crustacean aquaculture system. According to these embodiments a difference in height between an upper surface of liquid in a common supply reservoir and a drain in a common efflux tank contributes to behavior of the system.

It will be appreciated that the various aspects described above relate to solution of technical problems associated with enabling production of edible crustaceans (e.g. shrimp) in all locations close to regions where shrimp are consumed.

Alternatively or additionally, it will be appreciated that the various aspects described above relate to solution of technical problems related to increasing the yield of crustacean biomass per unit volume of production space.

According to the invention defined in claim 1 there is provided a method including: providing a multilayer closed conduit aquaculture enclosure; stocking the enclosure with shrimp; and growing with standing biomass of at least 12.5 kg/M³ of enclosure volume. In some exemplary embodiments of the invention, the method includes harvesting at least 450 kg/M³ of enclosure volume/year. Alternatively or additionally, in some embodiments the method includes harvesting at least 18.8 kg/M³ of enclosure volume at the end of each growth cycle. Alternatively or additionally, in some embodiments the method includes harvesting at a frequency of every 120 days or less.

The method according to the invention comprises providing a multilayer closed conduit aquaculture enclosure including: a vertical array of horizontal support surfaces, each surface connected to sidewalls and having an inlet side and an outlet side; a plurality of inlet pipes, each inlet pipe in fluid communication with a common reservoir and with an inlet side of one of the support surfaces in the vertical array; and an efflux tank in fluid communication with all of the outlet sides in the vertical array of support surfaces and having one or more drain holes situated above a level of an uppermost support surface in the array of support surfaces. In an embodiment which does not form part of the invention there is provided an aquaculture system including: a vertical array of horizontal support surfaces, each surface connected to sidewalls and having an inlet side and an outlet side; a common reservoir in fluid communication with the inlet sides of all of the support surfaces in the vertical array; and an efflux tank in fluid communication with all of the outlet sides in the vertical array of support surfaces and having one or more drain holes situated above a level of an uppermost support surface in the array of support surfaces. In some exemplary embodiments of the invention, either of these aquaculture systems includes one or more vertical dividers parallel to the sidewalls of each of the horizontal support surfaces dividing each support surface into two or more tubes; wherein each inlet pipe in the plurality of inlet pipes is in fluid communication with the common reservoir and with an inlet side of one of the tubes. Alternatively or additionally, in some embodiments either of the systems includes a waste removal port in proximity to a bottom of the efflux tank. Alternatively or additionally, in some embodiments the system includes a valve operable to open and close the waste removal port. Alternatively or additionally, in some embodiments the system includes a pump operable to circulate water from the common reservoir through the plurality of inlet pipes to the support surfaces. Alternatively or additionally, in some embodiments the system includes a control mechanism operable to differentially regulate a flow from the pump through each inlet pipe in the plurality of inlet pipes. Alternatively or additionally, in some embodiments the system includes a plurality of flow sensors, each sensor situated in an inlet pipe in the plurality of inlet pipes, or on a growth substrate, each sensor providing an output signal indicative of a flow rate to the control mechanism. Alternatively or additionally, in some embodiments the system includes a pump operable to collect water emanating from the drain holes and return it to the common reservoir.

In an embodiment which does not form part of the invention, there is provided an aquaculture method including: flooding a vertical array of horizontal support surfaces with water and stocking the water with crustaceans; causing water to flow from a common reservoir through a plurality of inlet pipes, each inlet pipe in fluid communication with the common reservoir and with an inlet side one of the support surfaces in the vertical array; collecting an efflux of water from the vertical array of horizontal support surfaces in an efflux tank; and draining water from the efflux tank via one or more drain holes situated above a level of an uppermost support surface in the array of support surfaces. In some embodiments the method includes dividing each support surface into two or more tubes; wherein each inlet pipe in the plurality of inlet pipes is in fluid communication with the common reservoir and with an inlet side of one of the tubes. Alternatively or additionally, in some embodiments the method includes removing waste via a waste removal port in proximity to a bottom of the efflux tank. Alternatively or additionally, in some embodiments the method includes pumping water from the common reservoir through the plurality of inlet pipes. Alternatively or additionally, in some embodiments the method includes differentially regulating a flow from the pump through each inlet pipe in the plurality of inlet pipes. Alternatively or additionally, in some embodiments the method includes monitoring flow rate in each inlet pipe in the plurality of inlet pipes. Alternatively or additionally, in some embodiments the method includes collecting water emanating from the drain holes and returning it to the common reservoir.

In an embodiment which does not form part of the invention, there is provided an aquaculture method including: filling an upper reservoir at altitude A with aquaculture medium; causing the medium to flow through a plurality of pipes, each pipe separately connected to one culture vessel in a plurality of stacked culture vessels; and collecting the medium in a common efflux tank with one or more drain holes at altitude a; wherein altitude a is below altitude A.

In an embodiment which does not form part of the invention, there is provided serial array of one or more aquaculture systems as described hereinabove5, wherein an efflux tank of one system serves as the common reservoir of a next system in the array.

In an embodiment which does not form part of the invention, there is provided method including: tilting a vertical array of horizontal support surfaces so that crustaceans residing thereon move to a common efflux tank; and collecting the crustaceans from the efflux tank. In some embodiments the collecting is via a drain.

In an embodiment which does not form part of the invention, there is provided an aquaculture system including: a vertical array of horizontal support surfaces, each surface connected to solid sidewalls and having an inlet side and an outlet side; and mesh covering the inlet side and the outlet side, the mesh having holes sized to retain shrimp on the support surfaces. In some embodiments the system includes one or more solid vertical dividers parallel to the sidewalls of each of the horizontal support surfaces dividing each support surface into two or more tubes. Alternatively or additionally, in some embodiments the system includes one or more floats having sufficient buoyancy to prevent the system from sinking beyond a desired degree when deployed in a body of water. Alternatively or additionally, in some embodiments the system includes one or more ballasts with weight sufficient to prevent the system from floating beyond a desired degree when deployed in a body of water. Alternatively or additionally, in some embodiments the system includes one or more anchor attachment points.

In an embodiment which does not form part of the invention, there is provided an aquaculture system including: multiple layers of stacked growth surfaces for crustaceans; and textured substrata applied to the growth surfaces. In some embodiments the textured substrata includes artificial grass. Alternatively or additionally, in some embodiments the textured substrata includes a hatching substrate.

Unless otherwise defined, all technical and scientific terms used herein have the same meaning as commonly understood by one of ordinary skill in the art to which this invention belongs. Although suitable methods and materials are described below, methods and materials similar or equivalent to those described herein can be used in the practice of the present invention. All materials, methods, and examples are illustrative only and are not intended to be limiting.

### BRIEF DESCRIPTION OF THE DRAWINGS

In order to understand the invention and to see how it may be carried out in practice, embodiments will now be described, by way of non-limiting example only, with reference to the accompanying figures. In the figures, identical and similar structures, elements or parts thereof that appear in more than one figure are generally labeled with the same or similar references in the figures in which they appear. Dimensions of components and features shown in the figures are chosen primarily for convenience and clarity of presentation and are not necessarily to scale. The attached figures are:
**Fig. 1a** is a front view (inlet side) of a system according to one exemplary embodiment of the invention;
**Fig. 1b** is a lateral transverse cross section of the exemplary system depicted in Fig. 1a through line A--A;
**Fig. 1c** is a top perspective view of the exemplary system depicted in Fig. 1a;
**Fig. 1d** is a top perspective view of the exemplary system depicted in Fig. 1a;
Fig. 1e is a frontal transverse cross section of the exemplary system depicted in Fig. 1d through line B--B;
**Fig. 2** is a simplified flow diagram of a method according to some exemplary embodiments of the invention;
**Fig. 3** is a simplified flow diagram of a method according to some exemplary embodiments which do not form part of the invention;
**Fig. 4a** is a simplified flow diagram of a method according to some exemplary embodiments which do not form part of the invention;
**Fig. 4b** is a schematic representation of an exemplary system configuration compatible with the method(s) illustrated in Fig 4a.;
**Fig. 5a** is a schematic representation of an exemplary system configuration according to some exemplary embodiments which do not form part of the invention;
**Fig. 5b** is a schematic representation of an exemplary system configuration according to some exemplary embodiments which do not form part of the invention; and
**Fig. 6** is a simplified flow diagram of a method according to some exemplary embodiments of the invention;
**Fig. 7** is a schematic side view of a system according to some exemplary embodiments which do not form part of the invention.

### DETAILED DESCRIPTION OF EMBODIMENTS

Embodiments relate to methods.

Specifically, some embodiments of the invention can be used for commercial production of shrimp or other crustaceans.

The principles and operation of a system and/or method according to exemplary embodiments of the invention may be better understood with reference to the drawings and accompanying descriptions.

Before explaining at least one embodiment of the invention in detail, it is to be understood that the invention is not limited in its application to the details set forth in the following description or exemplified by the Examples. The invention is capable of other embodiments or of being practiced or carried out in various ways. Also, it is to be understood that the phraseology and terminology employed herein is for the purpose of description and should not be regarded as limiting.

### System Overview

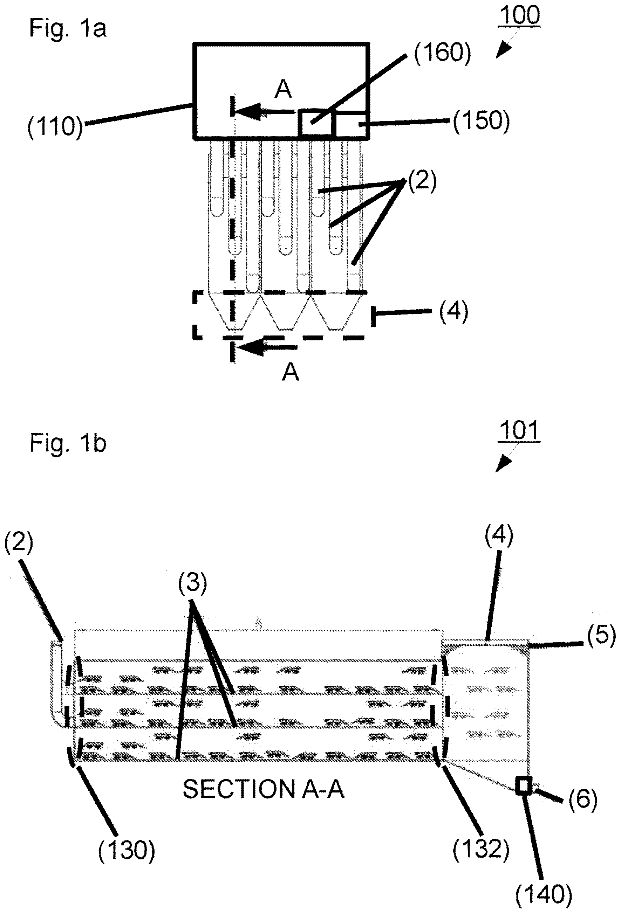

**Fig. 1a** is a front view (inlet side), indicate generally as 100, of a crustacean aquaculture system according to some exemplary embodiments of the invention.

**Fig. 1b** is a lateral transverse cross section of the exemplary system depicted in Fig. 1a through line A-A indicated generally as 101.

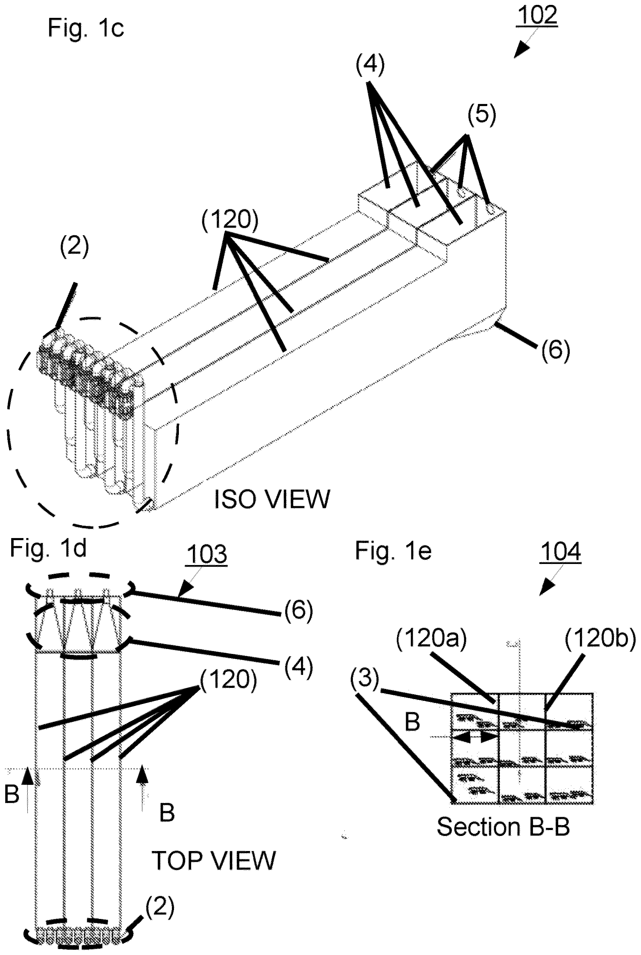

**Fig. 1c** is a top perspective view of the exemplary system depicted in Fig. 1a indicated generally as 102.

**Fig. 1d** is a top perspective view of the exemplary system depicted in Fig. 1a indicated generally as 103.

Fig. 1e is a frontal transverse cross section of the exemplary system depicted in Fig. 1d through line B-B indicated generally as 104.

Referring now to Figs. 1a; 1b; 1c; 1d and 1e concurrently, the depicted exemplary crustacean aquaculture system relies on stacks of horizontal support surfaces 3 to increase the yield of cultured crustaceans per M³ of enclosure volume and per M² of production/layout space. In the depicted embodiment, there are three vertically arrange horizontal support surfaces 3, each horizontal support surface enclosed by vertical partitions 120 and further divided by additional vertical partitions 120 into 3 parallel tubes. This produces a 3X3 matrix of parallel tubes as most clearly seen in Fig 1e.

Although a 3X3 matrix is used for illustration, various exemplary embodiments of the invention employ 5, 10, 20, 50, 100, 150, 200, 250, 300, 350, 400, 450 or 500 or intermediate or greater numbers of horizontal support surfaces 3. Alternatively or additionally, various exemplary embodiments of the invention employ 5, 10, 20, 25, 35, 50, 75 or 100 or intermediate or greater numbers of vertical walls 120 to divide horizontal support surfaces 3. In some exemplary embodiments of the invention, vertical walls 120 are solid.

Referring now to Fig 1a, each tube is supplied with water by an inlet pipe 2. Again, in the exemplary 3X3 matrix there are nine inlet pipes 2 bit other embodiments will have other numbers of inlet pipes. In the depicted embodiment, each inlet pipe 2 provides a flow of water from inlet end 130 along support surface 3 to outlet end 132 (Fig. 1b). In some embodiments, the flow of water is enriched with particulate food and/or nutrients in solution.

In the depicted embodiment, inlet pipes 2 draw water from a common reservoir 110 (Fig. 1a). In some embodiments, a pump 150 pumps water from reservoir 110 through pipes 2. In some embodiments, a control mechanism 160 differentially regulates a flow from pump 150 through each inlet pipe 2. In some embodiments, control mechanism 160 receives feedback signals from flow sensors in pipes 2 and/or at other places in the system and regulates flow in one or more pipes 2 according and/or across surfaces 3 to those signals.

In some exemplary embodiments of the invention, system 100 operates without pipes 2. According to these embodiments, common reservoir 110 is in in fluid communication with inlet sides 130 of all of support surfaces 3 in the vertical array.

Water at outlet end 132 (Fig. 1b) accumulates in a common efflux tank 4. In some embodiments, efflux tank 4 provides fluid communication among vertical support surfaces 3 and/or adjacent tubes on the same level. According to some of these embodiments, shrimp are free to move among different compartments via efflux tank 4. According to other embodiments, a screen is assembled at the end of each tube to prevent shrimp from moving from tube to tube. In the depicted embodiment, efflux tank 4 is equipped with a waste removal port 6. Waste removal port 6 allows efflux tank 4 to serve as a settling tank. A setting tank contributes to ease of removal of solid waste from the system and/or contributes to a reduction in wear on pumps in other parts of the system. In the depicted embodiment, a valve 140 is operable to close/open port 6. Drain holes 5 (most easily seen in Fig. 1c) allow water to flow out of the system. Elevation of drain holes 5 governs the height of water in the system. In some exemplary embodiments of the invention, water flowing out of drain holes 5 is collected and recirculated to reservoir 110. According to various exemplary embodiments of the invention, recirculation employs a pump and/or airlift.

### Exemplarv aquaculture method

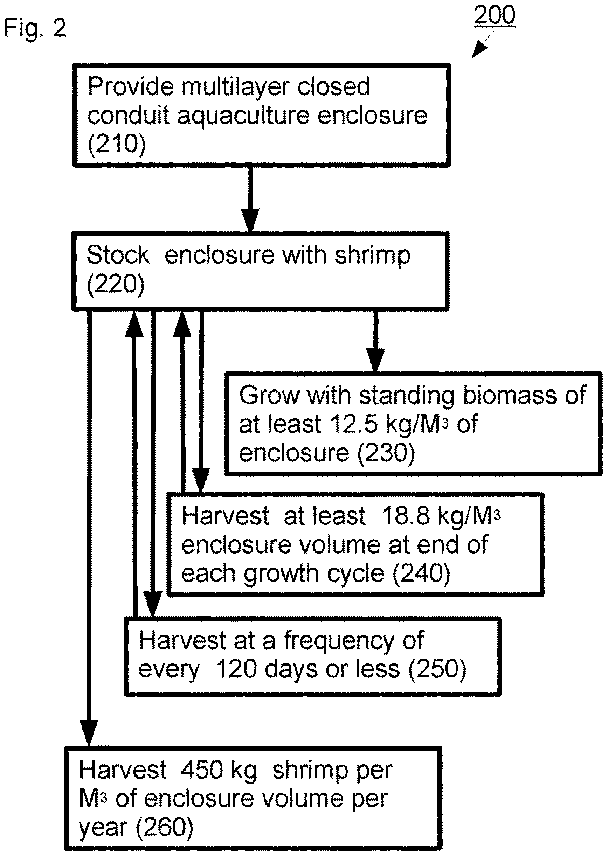

**Fig. 2** is a simplified flow diagram, indicated generally as 200, of an aquaculture method according to some exemplary embodiments of the invention.

Depicted exemplary method 200 includes providing 210 a multilayer closed conduit aquaculture enclosure, stocking 220 the enclosure with shrimp and growing 230 with at least standing biomass 12.5 kg/M³ of enclosure volume. According to various exemplary embodiments of the invention the standing biomass is 15 kg/M³, 20 kg/M³, 25 kg/M³, 35 kg/M³, 40 kg/M³, 50 kg/M³, 75 kg/M³, or 100 kg/M³ of enclosure volume or intermediate or greater standing biomass. It is noted that during practice of method 200, virtually all of the enclosure volume is filled with water. This represents a significant departure from many previously available alternatives in which spaces between growth surfaces are much greater than water depth.

In some exemplary embodiments of the invention, practice of method 200 results in an annual harvest 260 of 50 kg/M³, 100 kg/M³, 150 kg/M³, 200 kg/M³, 250 kg/, 300 kg/M³, 450 kg/M³ , 500 kg/M³ , 600 kg/M³, 700 kg/M³ or intermediate or greater annual yields.

In some exemplary embodiments of method 200 the growth cycle is less than 1 year. In some of these embodiments method 200 includes, harvesting 240 at least 8 kg/M³, 10 kg/M³, 15 kg/M³, 18.8 kg/M³, 20 kg/M³, 30 kg/M³, 35 kg/M³, 45 kg/M³, 50 kg/M³, 55 kg/M³, 60kg/M³ or 65 kg/M³ enclosure volume at the end of each growth cycle. In some of these embodiments method 200 includes, harvesting 250 at a frequency of every 120 days or less.

### Exemplary aquaculture system

Referring again to Figs 1a, 1b, 1c, 1d and 1e: some embodiments of the invention are an aquaculture system including a vertical array of horizontal support surfaces 3. In the depicted embodiment, each surface 3 is connected to sidewalls 120 and has an inlet side 130 and an outlet side 132. In some exemplary embodiments of the invention, sidewalls 120 are solid. In the depicted embodiment, the system includes a plurality of inlet pipes 2. In the depicted embodiment, each inlet pipe 2 is in fluid communication with a common reservoir 110 and with an inlet side of one of support surfaces 3 in the vertical array. In the depicted embodiment, the system includes an efflux tank 4 in fluid communication with all of the outlet sides 132 in the vertical array of support surfaces 3. Depicted exemplary efflux tank 4 has one or more drain holes 5 situated above a level of an uppermost support surface 3 in the array of support surfaces. Although surfaces 3 and walls 120 are depicted as discrete units in the drawing, in some embodiments surfaces 3 and walls 120 are provided as pipes or tubes of round, rectangular, hexagonal or triangular shape. Alternatively or additionally, in many embodiments vertical distance (height) between support surfaces 3 varies in the range of 2cm to 60 cm. For purposes of this specification and the accompanying claims, the term "horizontal" indicates the surface is at an angle of 0° to 45°.

In the depicted embodiment, the system includes one or more vertical dividers (see 120a and 120b in Fig. 1e) parallel to the sidewalls of each of horizontal support surfaces 3 dividing each support surface into two or more tubes. In some exemplary embodiments of the invention, dividers 120a and 120 b are solid. According to these embodiments, each inlet pipe in the plurality of inlet pipes is in fluid communication with the common reservoir and with an inlet side 130 of one of the tubes. This pipe configuration is depicted in Figs. 1a and 1c although the tubes themselves are hidden in those views.

In other exemplary embodiments of the invention, common reservoir 110 is in fluid communication with inlet sides 130 of all of support surfaces 3 in the vertical array. This configuration obviates a need for pipes 2.

In the depicted embodiment, the system includes a waste removal port 6 in proximity to a bottom of efflux tank 4. In some embodiments the system includes a valve 140 operable to open and close waste removal port 6.

The depicted embodiment also includes an optional pump 150 operable to circulate water from common reservoir 110 through the plurality of inlet pipes 2 to support surfaces 3. In some exemplary embodiments of the invention, pump 150 operates on airlift principle. In some exemplary embodiments of the invention, water pumped by pump 150 proceeds to outlet side 132 and into efflux tank 4. In some embodiments, water is recirculated from efflux tank 4 back to pump 150. In some embodiments, an additional pump (not depicted) handles this recirculation. Alternatively or additionally, in some embodiments a filtration system (not depicted) filters water being pumped through inlet pipes 2.

The depicted embodiment also includes an optional control mechanism 160 operable to differentially regulate a flow from pump 150 through each inlet pipe 2 in the plurality of inlet pipes and/or across support surfaces 3.

Some embodiments that employ a control mechanism 160 include a plurality of flow sensors (not depicted). In some embodiments, each sensor is situated in an inlet pipe 2 in the plurality of inlet pipes and/or on of support surfaces 3. According to these embodiments, each sensor provides an output signal indicative of a flow rate to control mechanism 160.

In some exemplary embodiments of the invention, the system includes a pump operable to collect water emanating from drain holes 5 and return it to common reservoir 110. In the depicted embodiment, this function is provided by pump 150, which has intake tubes (not depicted) in communication with drain holes 5. In other exemplary embodiments of the invention, a separate pump is used for water emanating from drain holes 5.

### Additional exemplary aquaculture method

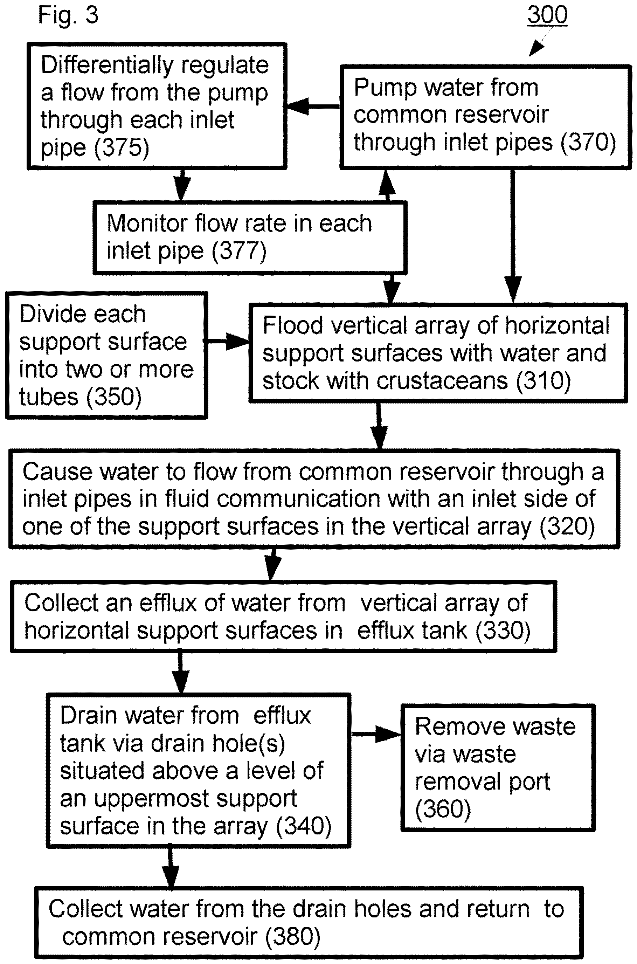

Fig. 3 is a simplified flow diagram of an aquaculture method, indicated generally as 300, according to some exemplary embodiments which do not form part of the invention.

Depicted exemplary method 300 includes flooding 310 a vertical array of horizontal support surfaces with water and stocking the water with crustaceans. In some embodiments, each support surface is covered with water that touches the bottom of the next support surface above it. In some embodiments, the uppermost support surface is fitted with a cover to govern water depth during flooding 310.

Depicted exemplary method 300 also includes causing 320 water to flow from a common reservoir through a plurality of inlet pipes. Each inlet pipe is in fluid communication with the common reservoir and with an inlet side one of the support surfaces in the vertical array.

Depicted exemplary method 300 also includes collecting 330 an efflux of water from the vertical array of horizontal support surfaces in an efflux tank.

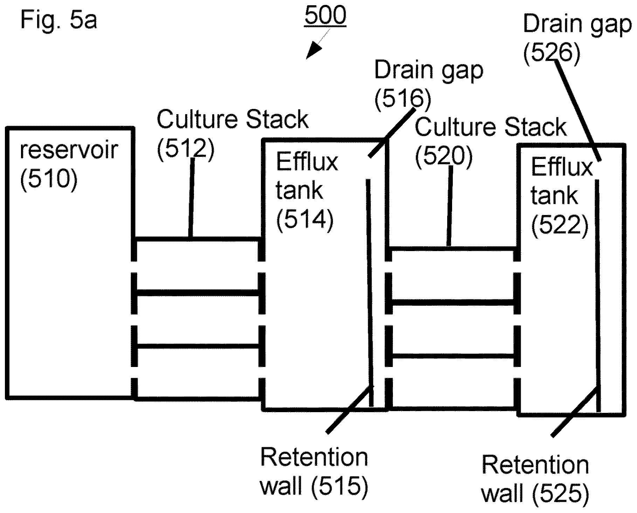

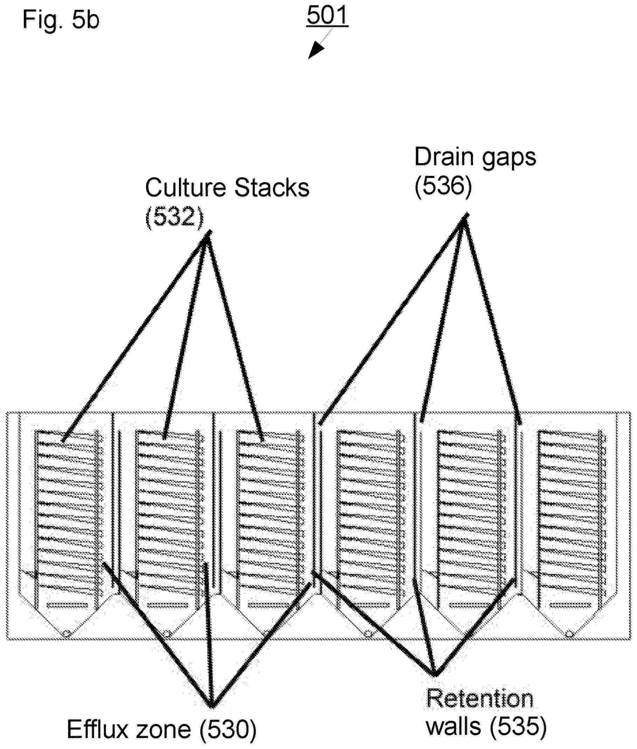

Depicted exemplary method 300 also includes draining 340 water from said efflux tank via one or more drain holes situated above a level of an uppermost support surface in said array of support surfaces. In some exemplary embodiments of the invention, the drain holes are configured as a gap. (See Figs. 5a, 5b, and accompanying description below)

Depicted exemplary method 300 also optionally includes dividing 350 each support surface into two or more tubes. According to embodiments including this optional feature, each inlet pipe in the plurality of inlet pipes is in fluid communication with the common reservoir and with an inlet side of one of the tubes.

Depicted exemplary method 300 also optionally includes removing waste 360 via a waste removal port in proximity to a bottom of the efflux tank.

Depicted exemplary method 300 also optionally includes pumping 370 water from said common reservoir through said plurality of inlet pipes and/or across support surface 3. In some embodiments pumping 370 contributes to flooding 310. Alternatively or additionally, in some embodiments pumping 370 includes differentially regulating 375 a flow from the pump through each inlet pipe in the plurality of inlet pipes. In some embodiments method 300 includes monitoring 377 flow rate in each inlet pipe in said plurality of inlet pipes. In some embodiments monitoring 377 regulates pumping 370 in a feedback loop.

Depicted exemplary method 300 also optionally includes collecting 380 water emanating from the drain holes and returning it to the common reservoir. In some exemplary embodiments which do not form part of the invention, collection and/or return involve use of a pump (e.g. airlift).

### Exemplary flow dynamics method

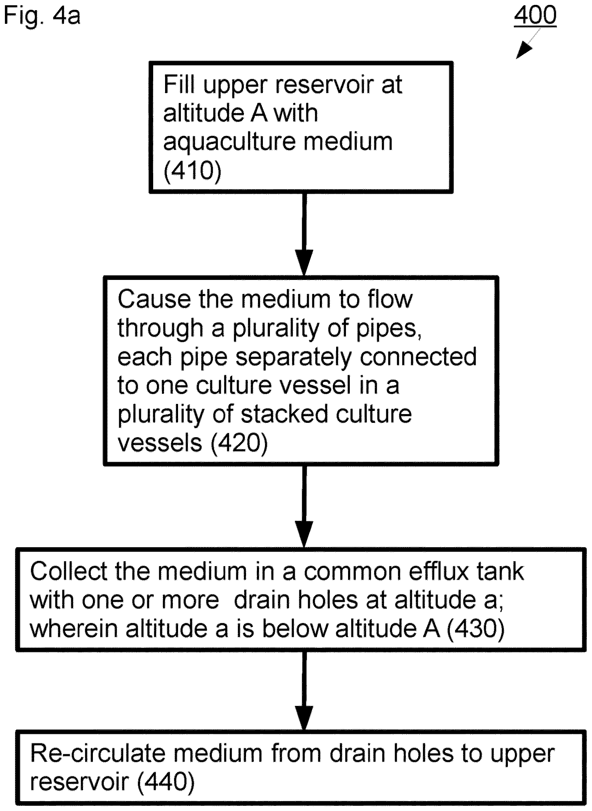

**Fig. 4a** is a simplified flow diagram, of a flow dynamics method indicated generally as 400, according to some exemplary embodiments which do not form part of the invention.

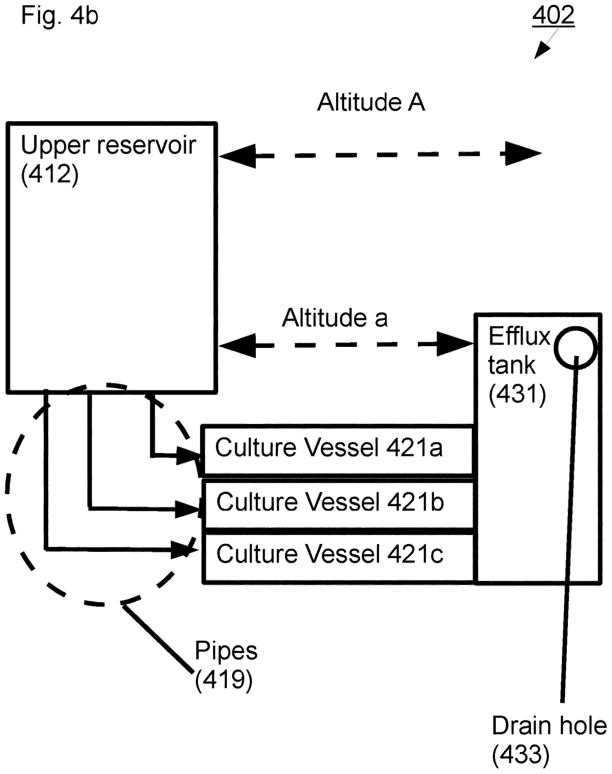

**Fig. 4b** is a schematic representation of an exemplary system configuration, indicated generally as 402, compatible with the method(s) illustrated in Fig 4a.

Referring now to Figs. 4a and 4b, depicted exemplary method 400 includes filling 410 an upper reservoir 412 at altitude A with aquaculture medium. Altitude A indicates an upper surface of liquid in reservoir 412.

Depicted exemplary method 400 also includes causing 420 the medium to flow through a plurality of pipes 419, each pipe separately connected to one culture vessel in a plurality of stacked culture vessels (421a; 421b and 421c). According to various exemplary embodiments, causing 420 includes pumping and/or relies on gravity feed. Although three pipes and three culture vessels are depicted for clarity, in actual practice a much larger number may be present. Alternatively or additionally, in many embodiments the stacked culture vessels include multiple vessels at the same height as depicted in Fig. 1e.

Depicted exemplary method 400 also includes collecting 430 the medium in a common efflux tank 431 with one or more drain holes 433 at altitude a. Altitude a is below altitude A as depicted. In some embodiments a difference between Altitude A and Altitude a contributes to a rate of flow of the medium throughout the system.

In various embodiments of method 400, culture vessels 421a, 421b and 421c are either horizontal (as depicted) or inclined.

In the depicted embodiment, method 400 includes re-circulating medium for drain holes 433 to upper reservoir 412.

### Exemplary serial stage aquaculture system

**Fig. 5a** is a schematic representation of an exemplary system configuration, indicated generally as 500, according to some exemplary embodiments which do not form part of the invention.

**Fig. 5b** is a schematic representation of an exemplary system configuration, indicated generally as 501, according to some exemplary embodiments which do not form part of the invention.

Some exemplary embodiments relate to a serial array of aquaculture systems as described hereinabove, wherein an efflux tank of one system serves as the common reservoir of a next system in the array.

Fig. 5a depicts an embodiment in which reservoir 510 is in communication with culture stack 512 via pipes with a length of zero. The tubes in stack 512 are in fluid communication with efflux tank 514. Retention wall 515 creates a drain gap 516 and water flowing through gap 516 is channeled into adjacent culture stack 520. Efflux tank 514 serves as the reservoir for stack 520. Water flows through stack 520 into efflux tank 522 where retention wall 525 guides the flow through drain gap 526 to the next culture stack (not depicted).

Fig. 5b depicts another embodiment in which each culture stack 532 is separated by an efflux zone 530, a retention wall 535 and a drain gap 536.

According to these embodiments, shrimp may move between the stages and may be kept in the layers/tubes only.

The depicted serial configuration enables utilization of water through more surface area before cleaning. Alternatively or additionally, the depicted configurations enable using one cleaning system with sequential stages. Although a serial horizontal array is depicted, serial vertical arrays are also possible.

Alternatively or additionally, the depicted serial configuration allows more solids and molt separation areas and/or provides intermediate areas for dead shrimp separation and sheltering of weak pre or post molting shrimp. In some embodiments, the serial configuration allows shrimp to move between culture stacks.

### Exemplary aquaculture harvest method

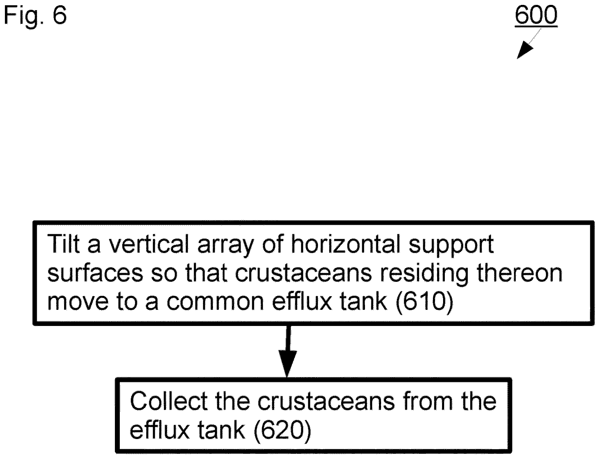

**Fig. 6** is a simplified flow diagram of an aquaculture harvest method, indicated generally as 600, according to some exemplary embodiments which do not form part of the invention.

Depicted exemplary method 600 includes tilting 610 or lifting a vertical array of horizontal support surfaces so that crustaceans residing thereon move to a common efflux tank and collecting 620 the crustaceans from the efflux tank. In some embodiments, collecting 620 is via a drain in the efflux tank (e.g. port 6 in Fig. 1b). According to various exemplary embodiments, thickness of each component of the assembly and/or height and/or width and/or length of the tubes is adjusted according to structural engineering requirements for each embodiment.

### Exemplary dimensions

For small shrimp, a tube height of 5 cm is sufficient. Adult shrimp may be more comfortable in a tube with a height of 15 cm. In some exemplary embodiments small fry are stocked in tubes with a 15cm height. In other exemplary embodiments shrimp are transferred from tubes of 5 cm to tubes with a greater height during the production cycle.

According to various exemplary embodiments tube length varies in the range of 0.5 M to 500 M. In various exemplary embodiments tube length is at least 0.5M, 5M, at least 10 M, at least 20 M, at least 50 M, at least 100M at or intermediate or greater lengths. Alternatively or additionally, according to various exemplary embodiments tube length is less than 500m, less than 400 M, less than 300 M, less than 200 M, or less than 100 M or intermediate or shorter lengths.

According to various exemplary embodiments tube width varies in the range of 0.5 M to 20 M. In various exemplary embodiments tube width is at least 0.5 M, at least 1 M, at least 2 M, at least 5 M at least 10M or intermediate or greater widths. Alternatively or additionally, according to various exemplary embodiments tube width is less than 20m, less than 15 M, less than 10 M, less than 5 M, or less than 1M or intermediate or shorter widths.

According to various exemplary embodiments tube height varies in the range of 0.02 M to 5 M. In various exemplary embodiments tube height is at least 0.05 M, at least 0.1 M, at least 0.2 M, at least 0.5 M at least 1.0M or intermediate or greater heights. Alternatively or additionally, according to various exemplary embodiments tube height is less than 2 m, less than 1.5 M, less than 1.0 M, less than 0.5 M, or less than 0.1M or intermediate or shorter heights.

In some exemplary embodiments efflux tank (e.g. 4 in Fig. 1c has a width equivalent to support surface 3 in a single layer and/or a height equivalent to the composite height of all support surfaces 3 in the stack. Alternatively or additionally, in some embodiments a length of efflux tank 4 is 0.2 M, 0.3M, 0.4 M, 0.5M 0.6 M, 0.7M, 0.8 M, 0.9M, 1 M, 1.5M, 2 M, 2.5 M or 3M or intermediate or greater lengths.

According to various exemplary embodiments reservoir 110 ranges from 1% of the total enclosure volume (defined by support surfaces 3 and walls/dividers 120) to 1000% of total enclosure volume. In some embodiments reservoir 110 provides a buffer of water in case there is a mechanical or electrical problem that prevents the supply of water from a clear water system. In submerged system configurations, reservoir 110 is absent. In some embodiments, reservoir 110 is provided as part of an RAS water treatment system connected to pipes 2.

According to various exemplary embodiments the system is constructed with 1-500 layers/tiers of culture spaces on a vertical axis and with 1-100 adjacent culture spaces on a horizontal axis.

### Exemplary production parameters

Stocking 7.5 kg of shrimp in a tube having 1m length and 1m width with a height of 60cm will result in a shrimp standing biomass of at least 12.5 kg/m³. Alternatively or additionally, stocking 10 kg of shrimp in a tube having 1m length and 1m width with a height of 10cm will result in a shrimp standing biomass of at least 100 kg/m³.

Providing enough surface growth area from 3.5 kg biomass/m² for small shrimp to 10 kg biomass/m² for large shrimp, the obtained biomass increases to the value of 67 kg Biomass/m³ enclosure volume at the 4^{th} life stage and to an average of 38 kg/m3 enclosure volume in a full life cycle.

### Exemplary installation configurations

The system can be installed in an inclined structure or sloped adjusted from time to time for allowing drainage and/or shrimp harvest. According to some exemplary embodiments the system is built with inclined support surfaces 3. In some embodiments, inclined support surfaces 3 contribute to ease of solid separation and/or to ease of harvesting. Alternatively or additionally, according to various exemplary embodiments support surfaces 3 have a permanent incline angle or adjustable incline angle.

The description hereinabove refers to land based installation (e.g. skid mounted). In other exemplary embodiments the aquaculture system is submerged in an open basin such as in the ocean, in a pond, in a river or in an estuary. Embodiments using submerged tubes contribute to an ability to use thinner materials for support surfaces 3 and/or vertical walls 120. In some embodiments, a low differential pressure contributes to a reduction in need for material thickness.

In a submerged system, vertical walls and horizontal support surfaces are subject to a similar pressure from both sides as a result of ambient water pressure from outside the system. When a material feels similar (or almost similar) pressure on both sides it can stand the pressure even if very thin.

In some embodiments, submerged installation enables the usage of thin layers due to lower pressure differences between the internal and external surfaces.

### Exemplary submerged system configuration

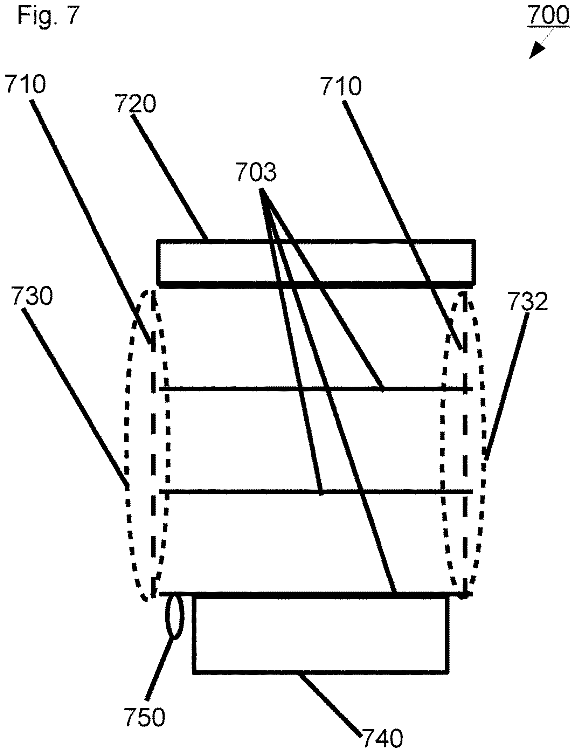

**Fig. 7****.** is a schematic side view of a submergible aquaculture system, indicated generally as 700, according to some exemplary embodiments, which do not form part of the invention.

In the depicted embodiment, system 700 includes a vertical array of horizontal support surfaces 703, each surface connected to solid sidewalls (not visible; similar to 120 in Fig. 1c) and having an inlet side 730 and an outlet side 732. Alternatively or additionally, in some embodiments support surfaces 703 are solid. For purposes of this specification and the accompanying claims, the term "solid" excludes mesh or netting. In the depicted embodiment, mesh 710 covers inlet side 730 and outlet side 732. In some embodiments, mesh 710 has holes sized to retain shrimp on support surfaces 703 while allowing water to flow across surfaces 703. In some embodiments, flow is natural (e.g. river current or ocean waves). In some embodiments, flow is provided by one or more pumps (not depicted).

In some exemplary embodiments system 700 includes solid vertical dividers (not visible; similar to 120 a and 120 b in Fig. 1e) parallel to the sidewalls of each of horizontal support surfaces 103 dividing each support surface into two or more tubes.

Depicted exemplary system 700 includes float 720 having sufficient buoyancy to prevent the system from sinking beyond a desired degree when deployed in a body of water. In some exemplary embodiments the floats are constructed of a low-density polymer. Alternatively or additionally, in some embodiments the floats are filled with air.

Alternatively or additionally, depicted exemplary system 700 includes ballast 740 with weight sufficient to prevent the system from floating beyond a desired degree when deployed in a body of water. In some exemplary embodiments ballast 740 is provided as a floodable ballast tank. In other exemplary embodiments of the invention, ballast 740 is constructed of a high-density material such as concrete or metal.

In some exemplary embodiments functionality of ballast 740 and float 720 resides in a single tank with a pump that can alternately fill the tank with air or water.

Alternatively or additionally, depicted exemplary system 700 includes an anchor attachment point 750. According to various exemplary embodiments attachment point 750 is provided as a ring, a hook or a chain. In some embodiments, several anchor attachments are provided in system 700. In some exemplary embodiments attachment to an anchor limits lateral shifting of system 700 with respect to a "floor" of the body of water in which the system is deployed.

### Miscellaneous optional features

In some exemplary embodiments the growth tubes are equipped with lighting. Alternatively or additionally, surfaces of substrate 3 and/or walls 120 are coated with high surface area material to promote biofilm or algae formation and/or to provide shelter and/or to increase survival rates. Biofilm and/or algae can serve as a source of feed or feed supplement for shrimp. Alternatively or additionally, the tubes include shelters for sheltering weak or molting shrimp to prevent cannibalism.

Alternatively or additionally, surfaces of substrate 3 and/or walls 120 are coated with a textured substrata for absorbing physical shock as a result of Caridoid Escape Reaction to minimize subsequent injuries and infection In some exemplary embodiments roughening of support surfaces 3 and/or vertical walls 120 contributes to a reduction in injuries and/or infection and/or provides sheltering of fragile shrimp. In some embodiments 10 mm Polypropylene fiber artificial grass serves as substrata (e.g. model GLLC-10; Zhonglian, China) In other exemplary embodiments BIOMAT hatching substrate (Dynamic Aqua Supply LTD; Surrey BC; Canada) serves as substrata.

Alternatively or additionally, in some embodiments the tubes include process and and/or analytical sensors and/or cameras and/or audio sensors to record feeding activity, biomass measurements and general shrimp behavior.

Alternatively or additionally, in some embodiments pipes 2 provide an adjustable flow. According to various exemplary embodiments flow adjustment is manual or automatic. According to various exemplary embodiments flow adjustment is used to regulate culture spaces replenishing rate and/or to regulate oxygen and/or nitrogen and/or CO₂ and/or other metabolic byproducts and/or to maintain a desired feed quality.

Alternatively or additionally, in some embodiments the aquaculture system includes water treatment by RAS (Recirculating Aquaculture System) and/or by circulation of water in a closed loop through an external water cleaning system and/or by one flow through method and/or by the biofloc method and/or combinations thereof.

Alternatively or additionally, in some embodiments the aquaculture system allows monitoring and controlling separately each tube, or pipe for one or more parameters including but not limited to oxygen, turbidity, feed amount, pH and ammonia.

### Exemplary aspect ratios

Many embodiments of the invention have a growth surface layout that is substantially rectangular when viewed from above.

In some exemplary embodiments sidewalls 120 and/or vertical dividers 120 contribute to structural integrity of the system in the face of the combined weight of water and shrimp. Alternatively or additionally, in some exemplary embodiments support surfaces 3 contribute to structural integrity of the system in the face of the combined weight of water and shrimp.

For example, as the length of the growth tubes increases, decreasing their width can increase structural strength. According to various exemplary embodiments an aspect ratio (Length to width) of 100:1; 500:1; 250:1; 100:1 or 50:1 contributes sufficiently to structural strength.

Alternatively or additionally, as the length of the growth tubes increases, decreasing their height can increase structural strength. According to various exemplary embodiments an aspect ratio (Length to height) of 20,000:1; 10,000:1; 5000:1; 2500:1; 1000:1 or 500:1 contributes sufficiently to structural strength.

Alternatively or additionally, as the width of the growth tubes increases, decreasing their height can increase structural strength. According to various exemplary embodiments an aspect ratio (width to height) of 1,000:1; 500:1; 250:1; 100:1; 50: 1 or 25: 1 contributes sufficiently to structural strength.

According to various exemplary embodiments particular materials selected for construction, and their thickness will contribute to selection of the various aspect rations.

### Exemplary advantages

In some embodiments implementation of systems and/or methods as described hereinabove contribute to an increase in yield per unit area of farm space. Much of that increase comes from more efficient utilization of the vertical dimension. Multiple tiers of growth substrate (e.g. support surfaces 3) contribute to more efficient utilization of the vertical dimension. A decrease in intervening space between multiple tiers of growth substrate (relative to previously described stacked aquaculture systems such as US 8,336,498 to Lawrence) also contributes to more efficient utilization of the vertical dimension.

An increase in yield per unit area of farm space contributes to a reduced need for real estate for a commercial production facility. Since the price of real estate is usually higher in proximity to a city, practice of the described systems and methods makes it possible to install an aquaculture facility close to a large city without undue expense. The city will provide numerous outlets for fresh shrimp in the form of restaurants, markets and stores.

Alternatively or additionally, implementation of systems and/or methods as described hereinabove eliminate bycatch associated with traditional wild-catch commercial shrimping methods.

As used herein the term "about" refers to ± 10 %.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

### EXAMPLES

Reference is now made to the following examples, which together with the above descriptions and/or the attached drawings, illustrate the disclosure in a non-limiting fashion.

### EXAMPLE 1:

### Theoretical Production Yields

Table 1 illustrates theoretical production yields using a small aquaculture system of the general configuration depicted in Figs. 1a to 1e.

**Table 1: summary of theoretical production parameters**

| **Example 1** | | | | |
|---|---|---|---|---|
| Calculation example | Small system | | | |
| Suggested layer dimension | **Shrimp stage 1** | **Shrimp stage 2** | **Shrimp stage 3** | **Shrimp stage 4** |
| B cell width, m | 0.5 | 1 | 1 | 1 |
| C Cell height , m | 0.05 | 0.05 | 0.1 | 0.15 |
| A Cell length, m | 2 | 4 | 14 | 25 |
| Stage Duration (month) | 1 | 1 | 1 | 1 |
| **Standing biomass, [kg]** | 47 | 263 | 561 | **1,000** |
| Design Density [kg/m2 of tube bottom surface] | 3.5 | 4.9 | 6.5 | 10 |
| Required area[ m2] | 13 | 54 | 86 | 100 |
| Design Specific biomass [kg/m3] | 70.0 | 97.6 | 65.0 | 66.7 |
| No of cell tiers | 12 | 12 | 6 | 4 |
| System total height, m | 0.60 | 0.60 | 0.60 | 0.60 |
| Top view area, m2 | 1.0 | 4.2 | 14.0 | 25.0 |
| **Standing biomass [kg/m2 top view area]** | 47 | 62 | 40 | **40** |
| **Actual Standing Biomass/volume [kg/m3]** | 77.8 | 103.1 | 66.8 | 66.7 |
| **Annual yield [kg/m2 of top view area/year]** | **271** | | | |
| **Annual yield [kg/m3/year]** | **452** | | | |
| **Kg/m3/ grow cycle** | **37.7** | | | |

This example illustrates that the projected annual shrimp yield for a small system having a total tiers height of 0.6 m (12 tiers at stages 1 and 2, and 6 an 4 tiers at stages 3 and 4 respectively) according to one exemplary embodiment reaches 271 kg/m² of floor surface (top view) and/or 452 kg/m³ of system volume. The exemplary embodiment shows 37.7 kg/m3 per growth cycle.

This example illustrates the projected annual shrimp yield for a system with monthly stages of growth and at the end of each stage the shrimp are moved into the next stage and the first stage is stocked with a new batch of shrimp. Therefore there are 12 harvests possible each year. This exemplary embodiment holds the tube cell combination for each stage to the same total height of 0.6 meters and the number of stacked tubes according to the cell height. This exemplary embodiment adjusts total area for shrimp growth by adjusting cell length and or width to maintain planned maximum biomass densities of kg/m² of tube bottom surface as listed. The embodiment attains 271 kg/m² of production area (e.g. building size) and 452 kg/m³ of system water volume or approximately building volume since the space between layers is the thickness of the cell floor.

Alternatively or additionally, the same Annual yield kg/m2 of production area (e.g. building size) can be maintained at 271 kg/m2 with a decrease in shrimp density kg/m2 of tube bottom surface by proportionally increasing the number of cell layers. The density at the end of each month could be reduced to 50% of the values listed by increasing the number of cell layers from 4 to 8.

In this example, required area (total surface) is a result of dividing total standing biomass (kg) by the growth density (e.g. 3.5 kg/m2) - since standing biomass in each step is different, and the required growth area per kg is different, the required total area is different for each stage. It is by a coincidence (of the standing biomass and growth density) that in stage 3 and 4, the required area result is the same.

According to various exemplary embodiments tube length can be equal or vary between growth stages. In this example, total height remained constant in each stage, so different lengths were used in each stage in each stage. According to various exemplary embodiments growth stages are connected or not. In this example, each stage has its own stack. In other exemplary embodiments stages are serially connected.

Table 1 shows that standing biomass per unit area and per unit volume varies from stage 1 to 4. This is an artifact caused by small tube heights in stages 1 and 2.

### EXAMPLE 2:

### Alternate Theoretical Production Yields

Table 2 illustrates theoretical production yields using a medium aquaculture system of the general configuration depicted in Figs. 1a to 1e.

**Table 2: summary of theoretical production parameters**

| **Example 2** | | | | |
|---|---|---|---|---|
| Calculation example | Medium system | | | |
| Suggested layer dimension | **Shrimp stage 1** | **Shrimp stage 2** | **Shrimp stage 3** | **Shrimp stage 4** |
| B cell width, m | 0.5 | 0.75 | **1** | **1** |
| C Cell height, m | 0.05 | 0.05 | 0.1 | 0.15 |
| A Cell length, m | 4 | | 11 28 | 50 |
| Stage Duration (month) | 1 | 1 | 1 | 1 |
| **Standing biomass, [kg]** | 931 | 5,256 | 11,215 | **20,000** |
| Design Density [kg/m2 of tube bottom surface] | 3.5 | 4.9 | 6.5 | 10 |
| Required area] m2] | 266 | 1,077 | 1,725 | 2,000 |
| Design Specific biomass [kg/m3] | 70.0 | 97.6 | 65.0 | 66.7 |
| No of cell tiers | 120.0 | 120.0 | 60.0 | 40 |
| System total height, m | 6.0 | 6.0 | 6.0 | 6 |
| Top view area, m2 | 2.0 | 8.5 | 28 | 50 |
| **Standing biomass [kg/m2 top view area]** | 467.0 | 618.6 | 400.8 | **400** |
| **Actual Standing Biomass/volume [kg/m3]** | 77.8 | 103.1 | 66.8 | **66.7** |
| **Annual yield [kg/m2 of top view area/year]** | **2,713** | | | |
| **Annual yield [kg/m3/year]** | **452** | | | |
| **Kg/m3/ grow cycle** | **37.7** | | | |

This example illustrates that the projected annual shrimp yield for a medium system having a total tiers height of 6m (120 tiers at stages 1 and 2, and 60 and 40 tiers at stages 3 and 4 respectively) according to one exemplary embodiment reaches 2,713 kg/m² of floor surface (top view) and/or 452 kg/m³ of system volume. The exemplary embodiment shows 37.7 kg/m3 per growth cycle.

The increased yield per m² of floor surface shows the yield per unit area is scalable by increasing the number of horizontal support surfaces upon which shrimp are grown.

Notes on production parameters from the previous example apply here as well.

## Claims

1. A method comprising:
(a) providing a multilayer closed conduit aquaculture enclosure comprising a vertical array of horizontal support surfaces (3), each surface (3) connected to sidewalls (120) and having an inlet side and an outlet side, a plurality of inlet pipes (2), each inlet pipe (2) in fluid communication with a common reservoir (110) and with an inlet side of one of said support surfaces (3) in said vertical array; and an efflux tank (4) being in fluid communication with all of said outlet sides in said vertical array of support surfaces (3) and having one or more drain holes (5) situated above a level of an uppermost support surface in said array of support surfaces (3);
(b) stocking said enclosure with shrimp; and
(c) growing with standing biomass of at least 12.5 kg/M³ of enclosure volume.

2. The method according to claim 1, comprising harvesting at least 450 kg/M³ of enclosure volume/year.

3. The method according to claim 1 or claim 2, comprising harvesting at least 18.8 kg/M³ of enclosure volume at the end of each growth cycle.

4. The method according to any of claims 1 to 3, comprising harvesting at a frequency of every 120 days or less.

5. The method according to any one of claims 1 to 4, wherein the multilayer closed conduit aquaculture enclosure comprises:
one or more vertical dividers parallel to said sidewalls of each of said horizontal support surfaces dividing each support surface into two or more tubes;
wherein each inlet pipe in said plurality of inlet pipes is in fluid communication with said common reservoir and with an inlet side of one of said tubes.

6. The method according to any one of claims 1 to 5, wherein step (a) comprises providing:
a waste removal port (6) in proximity to a bottom of said efflux tank (4).

7. The method according to claim 6, wherein step (a) comprises providing:
a valve (140) operable to open and close said waste removal port (6).

8. The method according to any one of claims 1-7, wherein step (a) comprises providing:
a pump operable to circulate water from said common reservoir (110) through said plurality of inlet pipes to said support surfaces (3).

## Patentansprüche

1. Ein Verfahren, das Folgendes umfasst:
(a) Bereitstellen eines mehrschichtigen Aquakulturgehäuses mit geschlossener Leitung, das eine vertikale Anordnung von horizontalen Stützflächen (3) umfasst, wobei jede Fläche (3) mit Seitenwänden (120) verbunden ist und eine Einlassseite und eine Auslassseite aufweist, eine Vielzahl von Einlassrohren (2), wobei jedes Einlassrohr (2) in Fluidverbindung mit einem gemeinsamen Behälter (110) und mit einer Einlassseite von einer der Stützflächen (3) in der vertikalen Anordnung steht; und einen Abflussbehälter (4), der in Fluidverbindung mit allen Auslassseiten in der vertikalen Anordnung von Stützflächen (3) steht und ein oder mehrere Abflusslöcher (5) aufweist, die oberhalb des Niveaus einer obersten Stützfläche in der Anordnung von Stützflächen (3) liegen;
(b) Besetzen des Gehäuses mit Garnelen; und
(c) Züchten mit einer stehenden Biomasse von mindestens 12,5 kg/M³ des Gehäusevolumens.

2. Das Verfahren nach Anspruch 1, umfassend das Ernten von mindestens 450 kg/M³ des Gehäusevolumens/Jahr.

3. Das Verfahren nach Anspruch 1 oder Anspruch 2, bei dem am Ende jedes Wachstumszyklus mindestens 18,8 kg/M³ des Gehäusevolumens geerntet werden.

4. Das Verfahren nach einem der Ansprüche 1 bis 3, bei dem alle 120 Tage oder weniger geerntet wird.

5. Das Verfahren nach einem der Ansprüche 1 bis 4, wobei das mehrschichtige Aquakulturgehäuse mit geschlossenen Kanälen umfasst:
einen oder mehrere vertikale Teiler, die parallel zu den Seitenwänden jeder der horizontalen Stützflächen verlaufen und jede Stützfläche in zwei oder mehr Röhren unterteilen;
wobei jedes Einlassrohr in der Vielzahl der Einlassrohre in Fluidverbindung mit dem gemeinsamen Reservoir und mit einer Einlassseite eines der Rohre steht.

6. Das Verfahren nach einem der Ansprüche 1 bis 5, wobei Schritt (a) die Bereitstellung umfasst:
eine Abfallentnahmeöffnung (6) in der Nähe eines Bodens des Abflussbehälters (4).

7. Das Verfahren nach Anspruch 6, wobei Schritt (a) die Bereitstellung eines Ventils (140) umfasst, das zum Öffnen und Schließen der Abfallentnahmeöffnung (6) betätigt werden kann.

8. Das Verfahren nach einem der Ansprüche 1 bis 7, wobei Schritt (a) das Bereitstellen einer Pumpe umfasst, die so betrieben werden kann, dass sie Wasser aus dem gemeinsamen Behälter (110) durch die Vielzahl von Einlassrohren zu den Stützflächen (3) zirkulieren lässt.

## Revendications

1. Un procédé comprenant les étapes consistant à :
(a) fournir une enceinte d'aquaculture multicouche à conduit fermé comprenant un réseau vertical de surfaces de support horizontales (3), chaque surface (3) étant reliée à des parois latérales (120) et présentant un côté d'entrée et un côté de sortie, une pluralité de tuyaux d'entrée (2), chaque tuyau d'entrée (2) étant en communication fluidique avec un réservoir commun (110) et avec un côté d'entrée de l'une desdites surfaces de support (3) dans ledit réseau vertical ; et un réservoir d'efflux (4) étant en communication fluidique avec tous les côtés de sortie dudit réseau vertical de surfaces de support (3) et comportant un ou plusieurs trous de drainage (5) situés au-dessus d'un niveau d'une surface de support la plus élevée dans ledit réseau de surfaces de support (3) ;
(b) ensemencer ladite enceinte avec des crevettes ; et
(c) élever avec une biomasse sur pied d'au moins 12,5 kg/M³ du volume de l'enceinte.

2. Le procédé selon la revendication 1, comprenant la récolte d'au moins 450 kg/M³ de volume de l'enceinte/an.

3. Le procédé selon la revendication 1 ou la revendication 2, comprenant la récolte d'au moins 18,8 kg/M³ de volume de l'enceinte à la fin de chaque cycle de croissance.

4. Le procédé selon l'une des revendications 1 à 3, comprenant la récolte à une fréquence égale ou inférieure à 120 jours.

5. Le procédé selon l'une des revendications 1 à 4, dans lequel l'enceinte d'aquaculture multicouche à conduit fermé comprend :
un ou plusieurs diviseurs verticaux parallèles aux parois latérales de chacune des surfaces de support horizontales, divisant chaque surface de support en deux tubes ou plus ;
dans lequel chaque tuyau d'entrée de ladite pluralité de tuyaux d'entrée est en communication fluidique avec ledit réservoir commun et avec un côté d'entrée de l'un desdits tubes.

6. Le procédé selon l'une quelconque des revendications 1 à 5, dans lequel l'étape (a) consiste à prévoir :
un orifice d'évacuation des déchets (6) à proximité d'un fond dudit réservoir d'efflux (4).

7. Le procédé selon la revendication 6, dans lequel l'étape (a) consiste à prévoir :
une vanne (140) pouvant fonctionner pour ouvrir et fermer ledit orifice d'évacuation des déchets (6).

8. Le procédé selon l'une quelconque des revendications 1 à 7, dans lequel l'étape (a) consiste à prévoir :
une pompe capable de faire circuler l'eau depuis ledit réservoir commun (110) à travers ladite pluralité de tuyaux d'entrée vers lesdites surfaces de support (3).
